# EUROPEAN PATENT APPLICATION

(11) **EP 3 432 243 A1**
(43) Date of publication of application: **23.01.2019**
(21) Application number: 18184498.6
(22) Date of filing: 19.07.2018
(51) Int. Cl.: G06Q 30/02

(54) **INFORMATION PROCESSING APPARATUS AND CONTROL METHOD FOR AN INFORMATION PROCESSING APPARATUS**

(30) Priority: 21.07.2017 JP 2017142042
(71) Applicant: Toshiba TEC Kabushiki Kaisha, Tokyo 141-8562 (JP)
(72) Inventor: ZHENG, Haigang, Shinagawa-ku,, Tokyo 141-8562 (JP)
(74) Representative: Takeuchi, Maya

(57) **Abstract**

In accordance with an embodiment, an information processing apparatus includes an exchange processing start key, a display, and a controller. The exchange processing start key receives an operation to instruct to start point exchange processing of exchanging points into an exchange commodity. The display displays an exchange registration screen including information regarding the point exchange processing. The controller controls the display to display the exchange registration screen when the exchange processing start key receives the operation.

## Description

### FIELD

An embodiment described here generally relates to an information processing apparatus and a control method for an information processing apparatus.

### BACKGROUND

As one of sales promotion activities aiming at increasing sales at stores, there are a point exchange service (known as "loyalty program") in which points saved by customers can be exchanged into some gifts (hereinafter, referred to as exchange commodities). With this, the customers can pay by point exchange at the stores while the stores can increase regular customers by getting points members.

In a generally-used point exchange method of the prior art, a customer tells a store employee that he/she wants to exchange points at a service counter. The store employee inputs a membership number of the customer and an exchange commodity into a point exchange system to thereby perform point subtraction processing with an information processing terminal of the service counter, and gives the exchange commodity to the customer. Regarding this, in recent years, there is a need for providing performing point exchange at a register counter as an easier point exchange method. Further, irrespective of whether to perform point exchange at the service counter or the register counter, there is also a need for simplifying the processing of the point exchange to thereby enable the store employee to easily learn the processing procedure and achieve efficient processing. Thus, it is desirable to simplify the work related to the point exchange in the related art.

### SUMMARY OF INVENTION

To solve the above-cited problems, there is provided an information processing apparatus that manages points of a customer, which are exchangeable into an exchange commodity, and performs point exchange processing of exchanging points into an exchange commodity, comprising:
an exchange processing start key that receives an operation to instruct to start the point exchange processing;
a confirmation key that receives an operation to instruct to confirm the point exchange processing;
a display that displays an exchange registration screen including information regarding the point exchange processing; a first input interface for inputting identification information of the customer;
a second input interface for inputting identification information of the exchange commodity;
a memory including
   a first master that stores the identification information of the customer and information regarding cumulative points of the customer in association with each other, and
   a second master that stores the identification information of the exchange commodity and exchange commodity information including exchange points of the exchange commodity; and
a controller that
   controls the display to display the exchange registration screen when the exchange processing start key receives the operation,
   reads the cumulative points of the customer, which are associated with the identification information of the customer, which is input from the first master, when receiving an input of the identification information of the customer through the first input interface,
   reads the points of the exchange commodity, which are associated with the input identification information of the exchange commodity, from the second master when receiving an input of the identification information of the exchange commodity through the second input interface,
   controls the display to display the exchange commodity information, which is associated with the input identification information of the exchange commodity, on the exchange registration screen in a case where the read cumulative points of the customer are equal to or more than the read exchange points of the commodity and controls the display to display an error in a case where the read cumulative points of the customer are less than the read exchange points of the exchange commodity, and
   subtracts the read exchange points of the exchange commodity from the read cumulative points of the customer to thereby update the cumulative points of the customer in the first master when the confirmation key receives the operation.

Preferably, the controller may
control the display to display a sales registration screen for performing sales registration of commodities before the exchange processing start key receives the operation, and
switch the display of the display from the sales registration screen to the exchange registration screen when the exchange processing start key receives the operation.

Preferably, the controller may control the display to display, in a background of the exchange registration screen, a text indicating that the exchange registration screen is a screen for performing the point exchange processing.

Preferably, the controller may control the display to display a background of the exchange registration screen in color different from color of a background of the sales registration screen.

Preferably, the controller may generate, when the confirmation key receives the operation, point registration data including
the identification information of the exchange commodity,
a name of the exchange commodity,
the cumulative points,
the exchange points, and
cumulative points after the exchange processing, the cumulative points after the exchange processing being obtained by subtracting the exchange points from the cumulative points.

In another exemplary embodiment, there is also provided a control method for an information processing apparatus including an exchange processing start key that receives an operation to instruct to start point exchange processing of exchanging points into an exchange commodity, a confirmation key that receives an operation to instruct to confirm the point exchange processing, a display that displays an exchange registration screen including information regarding the point exchange processing, a first input interface for inputting identification information of the customer, a second input interface for inputting identification information of the exchange commodity, a memory including a first master that stores the identification information of the customer and information regarding cumulative points of the customer in association with each other and a second master that stores the identification information of an exchange commodity and exchange commodity information including exchange points of the exchange commodity, the control method comprising:
controlling the display to display the exchange registration screen when the exchange processing start key receives the operation;
reading the cumulative points of the customer, which are associated with the identification information of the customer, which is input from the first master, when receiving an input of the identification information of the customer through the first input interface;
reading the points of the exchange commodity, which are associated with the input identification information of the exchange commodity, from the second master when receiving an input of the identification information of the exchange commodity through the second input interface;
controlling the display to display the exchange commodity information, which is associated with the input identification information of the exchange commodity, on the exchange registration screen in a case where the read cumulative points of the customer are equal to or more than the read exchange points of the commodity and controlling the display to display an error in a case where the read cumulative points of the customer are less than the read exchange points of the exchange commodity; and
subtracting the read exchange points of the exchange commodity from the read cumulative points of the customer to thereby update the cumulative points of the customer in the first master when the confirmation key receives the operation.

Preferably, the control method for an information processing apparatus may further comprise:
controlling the display to display a sales registration screen for performing sales registration of commodities before the exchange processing start key receives the operation; and
switching the display of the display from the sales registration screen to the exchange registration screen when the exchange processing start key receives the operation.

Preferably, controlling the display to display the exchange registration screen may include controlling the display to display, in a background of the exchange registration screen, a text indicating that the exchange registration screen is a screen for performing the point exchange processing.

Preferably, controlling the display to display the exchange registration screen may include controlling the display to display a background of the exchange registration screen in color different from color of a background of the sales registration screen.

Preferably, the control method for an information processing apparatus may further comprise generating, when the confirmation key receives the operation, point registration data including the identification information of the exchange commodity, a name of the exchange commodity, the cumulative points, the exchange points, and cumulative points after the exchange processing, the cumulative points after the exchange processing being obtained by subtracting the exchange points from the cumulative points.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram showing a schematic configuration example of a store system according to an embodiment.
Fig. 2 is a block diagram showing a hardware configuration example of a headquarters server according to the embodiment.
Fig. 3 is a diagram showing a data configuration example of a commodity master according to the embodiment.
Fig. 4 is a diagram showing a data configuration example of a membership master according to the embodiment.
Fig. 5 is a diagram showing a data configuration example of an exchange commodity master according to the embodiment.
Fig. 6 is a block diagram showing a hardware configuration example of a store server according to the embodiment.
Fig. 7 is a block diagram showing a hardware configuration example and a functional configuration of a POS terminal according to the embodiment.
Fig. 8 is a front view showing a key arrangement example of a keyboard of the POS terminal according to the embodiment.
Fig. 9 is a diagram showing a display configuration example of a point exchange screen according to the embodiment.
Fig. 10 is a diagram showing a printing configuration example of a receipt according to the embodiment.
Fig. 11 is a diagram showing a printing configuration example of a journal according to the embodiment.
Fig. 12 is a flowchart showing a procedure example of registration processing executed by the POS terminal according to the embodiment.

### DETAILED DESCRIPTION

In accordance with an embodiment, an information processing apparatus manages points of a customer, which are exchangeable into an exchange commodity, and performs point exchange processing of exchanging points into an exchange commodity. The information processing apparatus includes an exchange processing start key, a confirmation key, a display, a first input interface, a second input interface, a memory, and a controller. The exchange processing start key receives an operation to instruct to start the point exchange processing. The confirmation key receives an operation to instruct to confirm the point exchange processing. The display displays an exchange registration screen including information regarding the point exchange processing. The first input interface is for inputting identification information of the customer. The second input interface is for inputting identification information of the exchange commodity. The memory includes a first master that stores the identification information of the customer and information regarding cumulative points of the customer in association with each other, and a second master that stores the identification information of the exchange commodity and exchange commodity information including exchange points of the exchange commodity. The controller controls the display to display the exchange registration screen when the exchange processing start key receives the operation. The controller reads the cumulative points of the customer, which are associated with the identification information of the customer, which is input from the first master, when receiving an input of the identification information of the customer through the first input interface. The controller reads the points of the exchange commodity, which are associated with the input identification information of the exchange commodity, from the second master when receiving an input of the identification information of the exchange commodity through the second input interface. The controller controls the display to display the exchange commodity information, which is associated with the input identification information of the exchange commodity, on the exchange registration screen in a case where the read cumulative points of the customer are equal to or more than the read exchange points of the commodity. The controller controls the display to display an error in a case where the read cumulative points of the customer are less than the read exchange points of the exchange commodity. Moreover, the controller subtracts the read exchange points of the exchange commodity from the read cumulative points of the customer to thereby update the cumulative points of the customer in the first master when the confirmation key receives the operation.

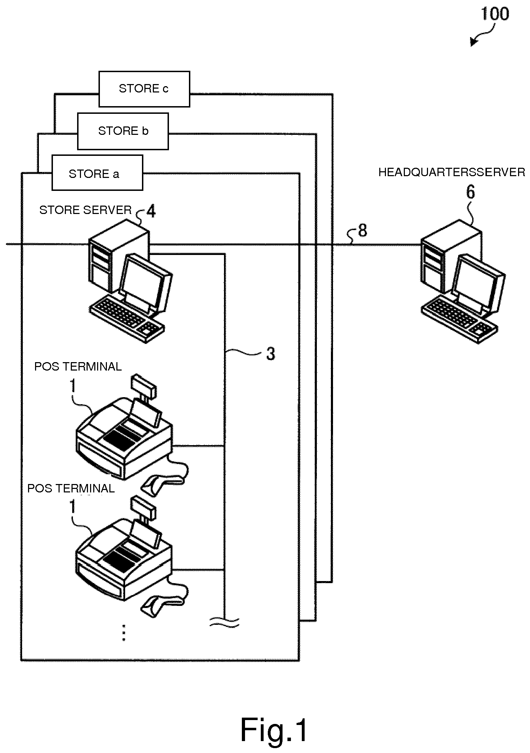

Hereinafter, an embodiment will be further described with reference to the drawings. In the drawings, identical symbols denote identical or similar parts. Fig. 1 is a schematic configuration diagram of a store system 100 according to this embodiment. Each of stores a, b, c includes at least one POS terminal 1. The POS terminal 1 is an information processing apparatus that performs sales registration of commodities. It should be noted that, although Fig. 1 shows an example in which two POS terminals 1 are connected to a store server 4 and used, the number of the POS terminals 1 used at the store is not particularly limited.

Each store server 4 is a server apparatus that comprehensively manages data received from the POS terminal 1 and other data at each of the stores a to c and performs sales management, inventory management, costs management, and the like of each of the stores a to c. The store server 4 is connected to the POS terminals 1 via connection lines 3 of a local area network (LAN) and the like provided in the store.
The store server 4 of each of the stores a to c is connected to a headquarters server 6 via a dedicated line 8. The headquarters server 6 is a server that performs sales management and inventory management, management of membership information and points, and the like for all the stores a to c. Note that when a customer purchases commodities, for example, points are given to the customer in a manner that depends on a payment (sales amount of store) for the purchased commodities. When the customer purchases a particular commodity, for example, the points can be used in exchange for a payment of this commodity. That is, the points can be exchanged into the commodity. Next, a functional configuration of each apparatus will be described.

First of all, the headquarters server 6 will be described.

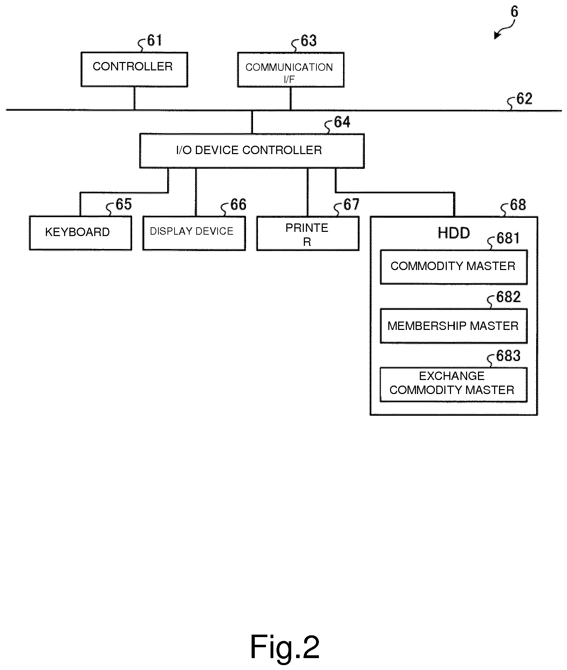

Fig. 2 is a block diagram showing a hardware configuration example of the headquarters server 6. The headquarters server 6 includes a controller 61. The controller 61 is a generally-used computer including a CPU, a ROM, a RAM, and the like. Further, a keyboard 65, a display device 66, a printer 67, and a hard disk drive (HDD) 68 are connected to the controller 61 via a bus 62 and an input/output (I/O) device controller 64. The controller 61 performs data communication with the store server 4 via a communication interface (I/F) 63 and the dedicated line 8.

The HDD 68 is a memory for storing various programs, a commodity master 681, a membership master 682, and a exchange commodity master 683. The various programs include programs for operating the CPU of the controller 61.

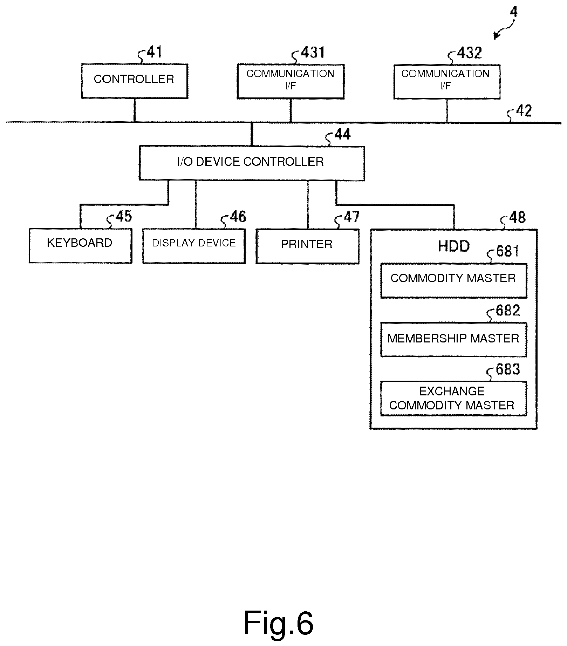

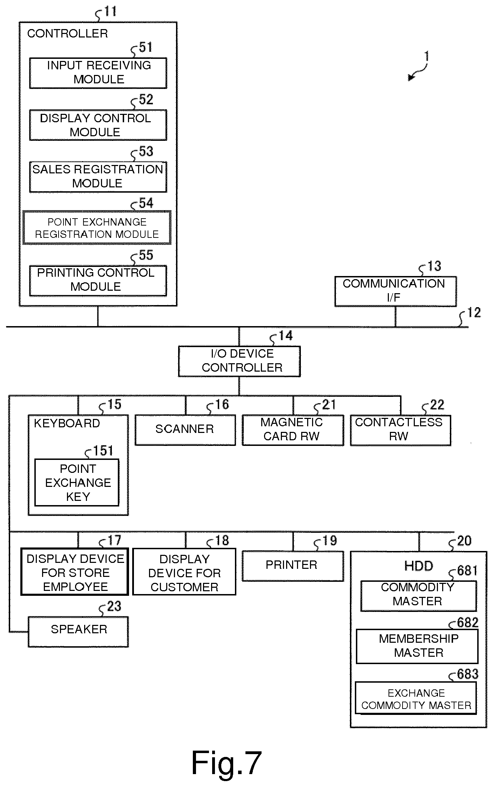

The headquarters server 6 manages and updates the commodity master 681, the membership master 682, and the exchange commodity master 683. Moreover, the headquarters server 6 delivers updated data to the store servers 4 of affiliated stores. Each of the store servers 4 updates the commodity master 681, the membership master 682, and the exchange commodity master 683 (see Fig. 6) of its own apparatus on a basis of the delivered data. Then, at a predetermined timing or when the POS terminals 1 receive a data update instruction, each of the POS terminals 1 at the identical store inquires of the store server 4 about the latest updated data of the commodity master 681, the membership master 682, and the exchange commodity master 683. Then, the POS terminal 1 copies the latest data of the store server 4, and updates the commodity master 681, the membership master 682, and the exchange commodity master 683 (see Fig. 7) of its own apparatus.

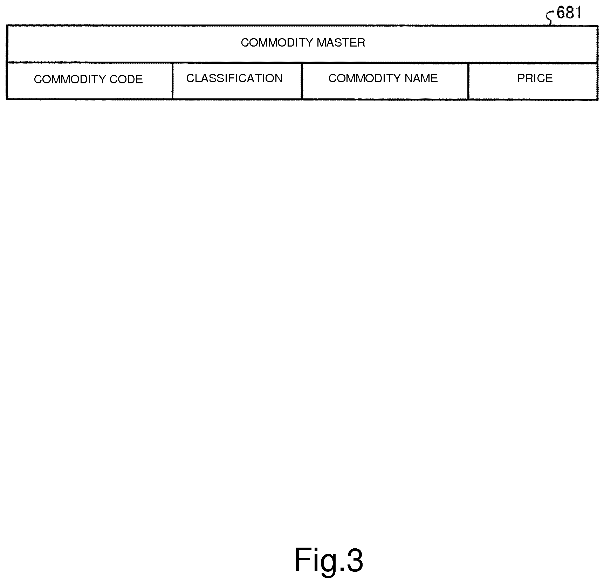

Fig. 3 is a diagram showing a data configuration example of the commodity master 681. The commodity master 681 is a master file for managing commodity information. The commodity master 681 stores the commodity information. The commodity information is used when normal sales registration is performed through payment of the customer. Specifically, as shown in Fig. 3, the commodity master 681 stores commodity codes that are identification information of commodities, classification of commodities, commodity names, and commodity prices in association with each other, as the commodity information.

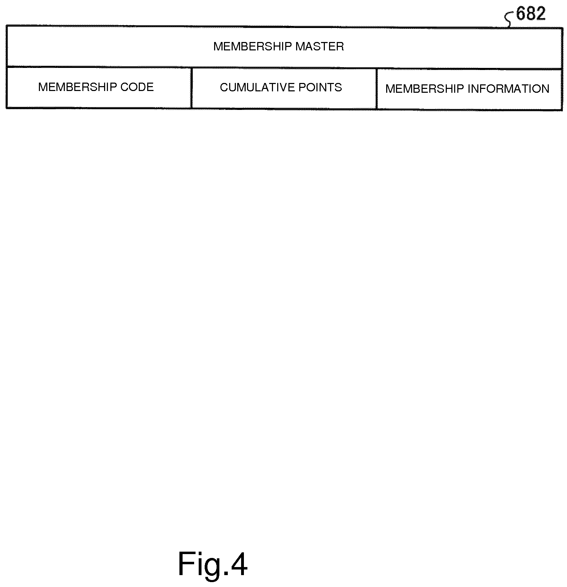

Fig. 4 is a diagram showing a data configuration example of the membership master 682. The membership master 682 is a master file for managing the membership information and the like. For example, the membership master 682 stores membership codes, cumulative points, the membership information (including members' names and contact addresses), and the like.

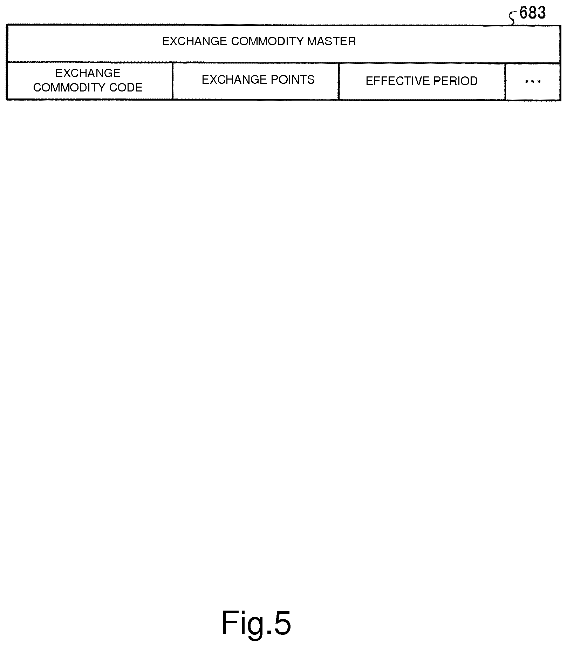

Fig. 5 is a diagram showing a data configuration example of the exchange commodity master 683. The exchange commodity master 683 stores exchange commodity codes that are identification information of exchange commodities and exchange points (use points) necessary for getting these exchange commodities in association with each other. The exchange commodity master 683 may additionally store effective periods and the like. The effective periods are periods in which those exchange commodities can be exchanged by points.

Next, the store server 4 will be described.

Fig. 6 is a block diagram showing a hardware configuration example of the store server 4. The store server 4 includes a controller 41. The controller 41 is a generally-used computer including a CPU, a ROM, a RAM, and the like. Further, a keyboard 45, a display device 46, a printer 47, and an HDD 48 are connected to the controller 41 via a bus 42 and an I/O device controller 44.

The controller 41 performs data communication with the POS terminal 1 via a communication I/F 431 and the connection lines 3. Further, the controller 41 performs data communication with the headquarters server 6 via a communication I/F 432 and the dedicated line 8. Further, the controller 41 requests the headquarters server 6 to send various types of data in accordance with a request provided by the POS terminal 1. In addition, the controller 41 sends data received from the headquarters server 6 to the POS terminal 1 that has provided such a request.

Various control programs, the commodity master 681, the membership master 682, the exchange commodity master 683, and various data files such as sales data files (not shown) are stored in the HDD 48. The various control programs include programs for operating the CPU of the controller 41.

Further, at a predetermined point of time or when the store employee inputs an instruction, the controller 41 downloads the latest commodity master 681, membership master 682, and exchange commodity master 683 from the headquarters server 6. The controller 41 updates the commodity master 681, the membership master 682, and the exchange commodity master 683 stored in the HDD 48 on a basis of the downloaded latest commodity master 681, membership master 682, and exchange commodity master 683. The method of updating the data is not particularly limited. For example, the controller 41 may update the commodity master 681, membership master 682, and exchange commodity master 683 stored in the HDD 48 by using data regarding differences between the downloaded latest masters 681 to 683 and the masters 681 to 683 stored in the HDD 48.

Next, the POS terminal 1 will be described.

Fig. 7 is a block diagram showing a hardware configuration example and a functional configuration example of the POS terminal 1. The POS terminal 1 includes a controller 11. The controller 11 is a generally-used computer including a CPU, a ROM, a RAM, and the like. Further, a keyboard 15, a scanner 16, a display device 17 for a store employee, a display device 18 for a customer, a printer 19, an HDD 20, a magnetic card reader/writer (RW) 21, a contactless reader/writer (RW) 22, and a speaker 23 are connected to the controller 11 via a bus 12 and an I/O device controller 14.

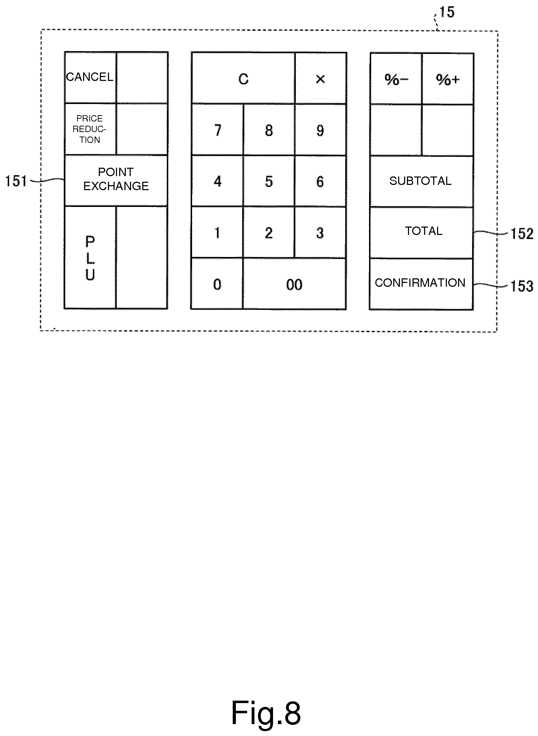

Fig. 8 is a front view showing a key arrangement example of the keyboard 15 of the POS terminal 1. The keyboard 15 includes a total key 152 for instructing to calculate the total sum of one transaction, a confirmation key 153 for confirming various types of processing, and the like as well as numeric keys and operator keys. Moreover, as shown in Fig. 8, the keyboard 15 of this embodiment includes a point exchange key 151 (exchange processing start key) that receives an instruction operation for starting processing of exchanging points into a commodity (hereinafter, sometimes referred to as point exchange processing).

The display device 17 for a store employee is, for example, a display apparatus such as a liquid-crystal display. A touch panel is stacked on a display screen of the display device 17 for a store employee. Note that the point exchange key 151 may be provided on this display screen on which the touch panel is stacked.

The various control programs, the commodity master 681 (sold commodity-storing means), the membership master 682, and the exchange commodity master 683 (exchange commodity-storing means) are stored in the HDD 20. The various control programs include a program executed by the controller 11. Using a predetermined point of time or an update instruction as a trigger, the controller 11 copies the commodity master 681, membership master 682, and exchange commodity master 683 of the store server 4. The controller 11 updates the commodity master 681, membership master 682, and exchange commodity master 683 stored in the HDD 20 by using the copied data.

The magnetic card reader/writer 21 reads and writes data from/on a membership card using a magnetic storage system and the like. For example, the magnetic card reader/writer 21 reads a membership code from the membership card. It should be noted that, although the membership code is used as the identification information of the customer herein, information regarding a member name, nickname, or the like may be used as the identification information of the customer. Further, the membership card is not limited to the card using the magnetic storage system. The membership card may be a card using another storage system. A reader/writer of a type depending on the storage system of the card is used as the reader/writer for the membership card.

The contactless reader/writer 22 reads and writes data from/in a portable electronic apparatus installing a contactless IC card or a contactless IC chip. For example, the contactless reader/writer 22 sends/receives information regarding electronic money settlement.

The controller 11 performs data communication with the store server 4 via the communication I/F 13 and the connection lines 3. Moreover, the controller 11 performs data communication with the headquarters server 6 via the dedicated line 8.

Next, a program according to this embodiment, which is executed by the controller 11 of the POS terminal 1, will be described. Note that the program executed by the controller 11 of the POS terminal 1 according to this embodiment is provided, incorporated in the HDD 20 or the like in advance. The program executed by the controller 11 of the POS terminal 1 according to this embodiment may be provided, recorded on a recording medium readable by a computer, such as a CD-ROM, a flexible disk (FD), a CD-R, and a digital versatile disk (DVD), as a file in an installable format or an executable format.

Moreover, the program executed by the controller 11 of the POS terminal 1 according to this embodiment may be stored in a computer connected to a network such as the Internet and provided by being downloaded via the network. Further, the program executed by the controller 11 of the POS terminal 1 according to this embodiment may be provided or delivered via the network such as the Internet.

As shown in Fig. 7, the program executed by the controller 11 of the POS terminal 1 according to this embodiment includes an input receiving module 51, a display control module 52, a sales registration module 53, a point exchange registration module 54, and a printing control module 55. As actual hardware, by reading the program according to this embodiment from the above-mentioned storage medium (ROM) and executing the read program, the CPU of the controller 11 loads each of the above-mentioned modules into a main storage apparatus. Then, the CPU of the controller 11 generates the input receiving module 51, the display control module 52, the sales registration module 53, the point exchange registration module 54, and the printing control module 55 in the main storage apparatus.

The input receiving module 51 receives information input in various input interfaces such as the communication I/F 13, the keyboard 15, the scanner 16, the magnetic card reader/writer 21, and the contactless reader/writer 22.

For example, the input receiving module 51 (identification information-receiving means) receives an input of the membership code which is read by the magnetic card reader/writer 21 from the membership card, as the identification information of the customer. It should be noted that the input receiving module 51 may receive the input of the membership code via the keyboard 15 or the touch panel on the display device 17 for a store employee. Further, in a case where the membership card does not use the magnetic storage system and is a card with a code symbol (bar code, two-dimensional code, etc.) of the membership code, the input receiving module 51 only needs to receive an input of the membership code which is read by the scanner 16. Alternatively, in a case where the membership card is an IC card equipped with an IC chip having a short-distance wireless communication function, the input receiving module 51 only needs to receive an input of the membership code which is read by the contactless reader/writer 22. Further, the method of receiving the identification information of the customer is not limited thereto. For example, information regarding a membership number, a mail address, a telephone number, and the like for identifying the customer may be read from the portable terminal equipped with an IC chip having a short-distance wireless communication function and such information may be received as the identification information of the customer.

Moreover, the input receiving module 51 (cumulative points-reading means) reads cumulative points corresponding to the membership code, the input of which has been received, from the membership master 682 (points-storing means).

Further, the input receiving module 51 (commodity information-receiving means) receives an input of information regarding a commodity to be sold.
Specifically, the input receiving module 51 receives an input of the commodity code read by the scanner 16 or an input of the commodity code from the keyboard 15.

Further, when the scanner 16 reads the code symbol added to the exchange commodity, the input receiving module 51 (exchange commodity information-receiving means) receives an input of the exchange commodity code obtained by decoding that code symbol. It should be noted that the exchange commodity code is identification information for determining the exchange commodity.

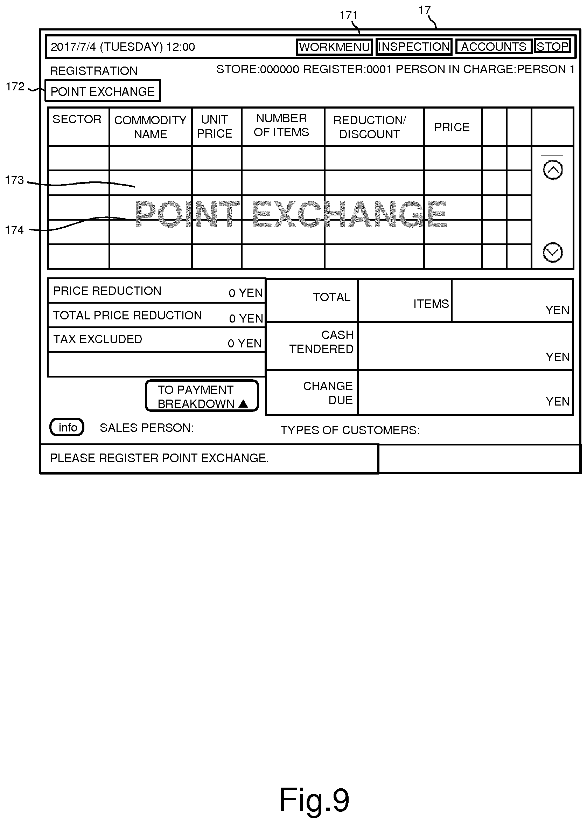

Further, when the confirmation key 153 of the keyboard 15 is operated in a state in which information related to the exchange commodity is displayed on a point exchange screen 171 (see Fig. 9), the input receiving module 51 receives a confirmation operation of point exchange using the displayed information.

The display control module 52 controls display processing on the display device 17 for a store employee or the display device 18 for a customer. For example, the display control module 52 (registration screen-displaying means) controls the display device 17 for a store employee to display a sales registration screen for performing sales registration of commodities.

Further, when the point exchange key 151 of the keyboard 15 (see Figs. 7 and 8) is selected and operated, the display control module 52 controls the display device 17 for a store employee to display the point exchange screen 171 (exchange registration screen). Specifically, in accordance with the operation of the point exchange key 151, the display control module 52 switches the display of the display device 17 for a store employee from the sales registration screen for performing sales registration of commodities to the point exchange screen 171 for performing the point exchange registration. The point exchange screen 171 is a screen for displaying the information regarding the point exchange processing and is a screen for performing the point exchange processing.

Fig. 9 is a diagram showing a display configuration example of the point exchange screen 171. As shown in Fig. 9, an icon 172 indicating that this screen is the point exchange screen 171 is displayed on the point exchange screen 171. Further, in a background 173 of the point exchange screen 171, a background text 174 indicating that this screen is the point exchange screen 171 is displayed. Further, the display control module 52 displays the background 173 of the point exchange screen 171 in color different from color of the background of the sales registration screen in the sales registration. By switching the display from the sales registration screen in the sales registration in this manner, the fact that the processing has been changed from the sales registration to the point exchange registration can be clearly presented to the operator.

Referring back to Fig. 7, the sales registration module 53 reads commodity information corresponding to the commodity code, which is received by the input receiving module 51, from the commodity master 681, and registers the read commodity information as commodity information of a sales target commodity. At this time, the display control module 52 controls the display device 17 for a store employee to display the information, which is read by the sales registration module 53 from the commodity master 681, on the sales registration screen, and updates the display of the sales registration screen.

When the input receiving module 51 receives the input of the exchange commodity code, the point exchange registration module 54 (point exchange means) reads the information corresponding to this exchange commodity code, from the exchange commodity master 683 (see Fig. 5) of the HDD 20. Then, the point exchange registration module 54 determines whether or not the cumulative points read by the input receiving module 51 from the membership master 682 in this manner are equal to or more than the exchange points read from the exchange commodity master 683 of the HDD 20.

If the cumulative points are equal to or more than the exchange points, the point exchange registration module 54 performs processing of exchanging these exchange points into a point exchange commodity. Specifically, the point exchange registration module 54 updates the cumulative points of the membership master 682 by subtracting the exchange points read from the exchange commodity master 683 of the HDD 20 from the cumulative points of the membership code received by the input receiving module 51. In this manner, the point exchange registration module 54 performs processing when the points saved by the customer are exchanged into the point exchange commodity.

Further, if the cumulative points read from the membership master 682 of the HDD 20 are less than the exchange points read from the exchange commodity master 683 of the HDD 20, the point exchange registration module 54 does not perform the registration processing related to the point exchange and determines it as an error.

### - Screen Display in Point Exchange Processing

If the cumulative points are equal to or more than the exchange points, the display control module 52 (second display-controlling means) controls the display device 17 for a store employee to display the information read by the point exchange registration module 54 from the exchange commodity master 683 of the HDD 20, i.e., the information associated with the exchange commodity of the exchange commodity code on the point exchange screen 171 (see Fig. 9).

On the other hand, if the cumulative points are less than the exchange points and the point exchange registration module 54 determines it as an error, the display control module 52 outputs an error indication to the display device 17 for a store employee. Although the contents of the error indication are not particularly limited, the contents of the error indication only need to be, for example, contents including a message indicating that the cumulative points are insufficient, shortage points, and the like.

### - Data Related to Point Exchange Registration

When the input receiving module 51 receives the operation of the confirmation key 153 of the keyboard 15 in a state in which the information related to the exchange commodity is displayed on the point exchange screen 171, the point exchange registration module 54 (point exchange means) executes the point exchange processing. Specifically, the point exchange registration module 54 subtracts the exchange points of the exchange commodity from the cumulative points of the membership code to thereby calculate new cumulative points of this membership code (hereinafter, referred to as remaining points). Then, the point exchange registration module 54 generates point registration data and printing data (printing data related to point exchange) based on the point registration data as data related to the point exchange registration (hereinafter, sometimes referred to as point registration data). The point registration data includes an exchange commodity code of an exchange commodity, a name of the exchange commodity, the number of exchange commodities, cumulative points before point exchange, exchange points, remaining points after point exchange, and a membership code (membership number) of the member whose points have been exchanged. The point exchange registration module 54 registers the generated point registration data and printing data in an electronic journal file (not shown) of the HDD 20.

The point exchange registration module 54 sends the generated point registration data to the store server 4 and the headquarters server 6. Further, the point exchange registration module 54 outputs the generated printing data related to the point exchange to the printing control module 55.

It should be noted that the transmission destination of the generated point registration data is not limited to the store server 4 and the headquarters server 6. For example, the point exchange registration module 54 may generate data for an electronic receipt on a basis of the generated point registration data and send the generated data for the electronic receipt to a server that delivers the electronic receipt to the customer.

The printing control module 55 (output means) outputs the printing data to the printer 19 and controls the issue of the receipt and the journal. That is, when the input receiving module 51 receives the confirmation operation of the point exchange processing, the printing control module 55 issues the receipt and the journal on which the registration contents of the point exchange processing (contents of the point registration data) have been printed by using the printing data generated by the point exchange registration module 54.

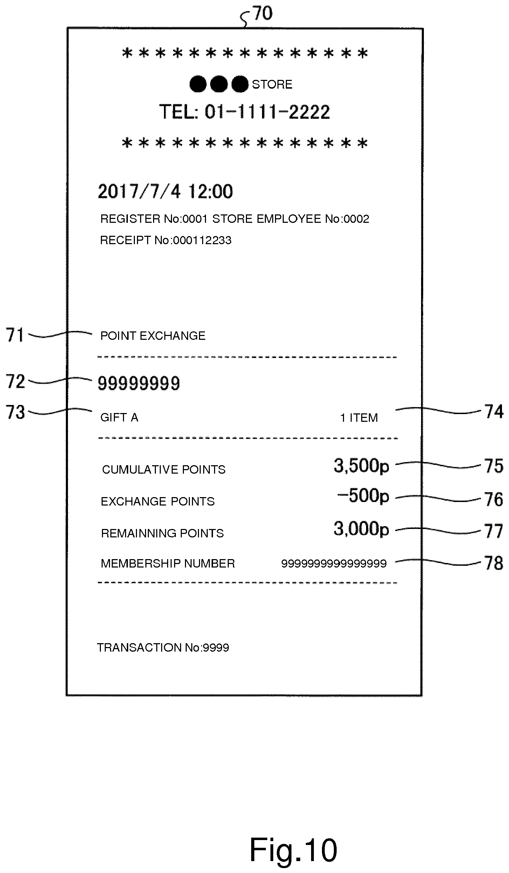

Fig. 10 is a diagram showing a printing configuration example of the receipt 70. As illustrated in Fig. 10, on the receipt 70, a title 71 indicating that this receipt 70 is a receipt related to the point exchange processing is printed. Below the title 71, an exchange commodity code 72 of the exchange commodity, a name 73 of the exchange commodity, and the number of exchange commodities 74 are printed. Below such information 71 to 74 indicating the exchange commodity, information regarding the points of the member is printed. The information regarding the points of the member includes cumulative points 75 before point exchange, exchange points 76, the remaining points 77 that are cumulative points after point exchange, and a membership number 78 (membership code).

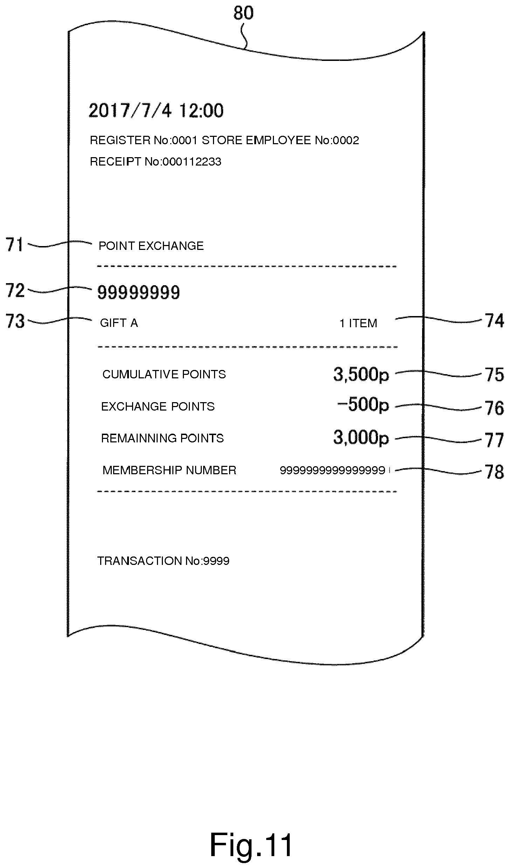

Fig. 11 is a diagram showing a printing configuration example of a journal 80. As illustrated in Fig. 11, on the journal 80, a title 71 indicating that this journal 80 is a journal related to the point exchange processing is printed. Further, below the title 71, an exchange commodity code 72 of the exchange commodity, a name 73 of the exchange commodity, and the number of exchange commodities 74 are printed as in Fig. 10. Moreover, cumulative points 75 before point exchange, exchange points 76, remaining points 77 that are cumulative points after point exchange, and the membership number 78 (membership code) are therebelow printed as information regarding the points of the member.

Next, the registration processing executed by the POS terminal 1 will be described.

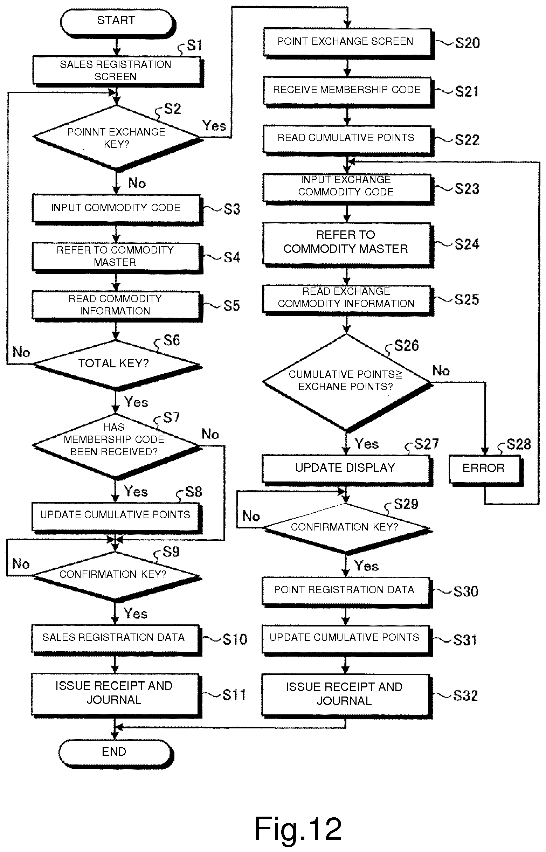

Fig. 12 is a flowchart showing the registration processing executed by the controller 11 of the POS terminal 1 (see Fig. 7). When the POS terminal 1 is activated, in Step S1 shown in Fig. 12, the display control module 52 controls the display device 17 for a store employee to display the sales registration screen. Subsequently, in Step S2, the input receiving module 51 determines whether or not the point exchange key 151 has received a selection operation.
If the point exchange key 151 has not received the selection operation (Step S2: No), the processing of the controller 11 shifts to Step S3. If the point exchange key 151 has received the selection operation (Step S2: Yes), the processing of the controller 11 shifts to Step S20.

In Step S3, when the scanner 16 reads a code symbol added to a commodity, the input receiving module 51 receives an input of a commodity code obtained by decoding the code symbol. In Step S4, the sales registration module 53 refers to the commodity master 681 of the HDD 20 in relation to the input commodity code. In Step S5, on a basis of the reference result, the sales registration module 53 reads commodity information associated with this commodity code from the commodity master 681 of the HDD 20. In Step S6, the input receiving module 51 determines whether or not the total key 152 of the keyboard 15 has received an operation. If the total key 152 of the keyboard 15 has not received the operation (Step S6: No), the processing of the controller 11 returns to Step S2. If the total key 152 of the keyboard 15 has received the operation (Step S6: No), the processing of the controller 11 shifts to Step S7. In Step S7, the display control module 52 controls the display device 17 for a store employee to display a message for instructing to read a membership card on the sales registration screen. Moreover, the input receiving module 51 determines whether or not the input receiving module 51 has received an input of the membership code. When the magnetic card reader/writer 21 reads a membership code from the membership card, the input receiving module 51 receives the input of the membership code as the identification information of the customer. If the input receiving module 51 has received the input of the membership code (Step S7: Yes), the processing of the controller 11 shifts to Step S8. In Step S8, the sales registration module 53 calculates points depending on the total sum, and updates the cumulative points by adding the calculated points to the current cumulative points. On the other hand, if the input receiving module 51 has not received the input of the membership code (Step S7: No), the processing of the controller 11 shifts to Step S9.

Next, in Step S9, the input receiving module 51 determines whether or not the confirmation key 153 of the keyboard 15 has received an operation. If the confirmation key 153 of the keyboard 15 has received the operation (Step S9: Yes), the processing of the controller 11 shifts to Step S10. In Step S10, the sales registration module 53 generates, on a basis of information related to sales registration of one transaction which is displayed on the sales registration screen, sales registration data of this transaction, and registers the generated sales registration data in the electronic journal file of the HDD 20. Further, the sales registration module 53 sends the sales registration data to the store server 4 and the headquarters server 6. The sales registration data is registered in the data file managed by both the store server 4 and the headquarters server 6. In Step S11, the printing control module 55 issues a receipt and a journal on which the sales registration data has been printed. It should be noted that, if the confirmation key 153 of the keyboard 15 has not received the operation (Step S9: No), the input receiving module 51 stands by until the confirmation key 153 receives the operation.

On the other hand, in Step S2, if the point exchange key 151 has received the selection operation (Step S2: Yes), the processing of the controller 11 shifts to Step S20. In Step S20, the display control module 52 switches the display of the display device 17 for a store employee from the sales registration screen (see Step S1) to the point exchange screen 171 (see Fig. 9). Subsequently, in Step S21, the input receiving module 51 receives the membership code read by the magnetic card reader/writer 21 from the magnetic information of the membership card. In Step S22, the point exchange registration module 54 refers to the membership master 682 of the HDD 20 in relation to the membership code received in Step S21. On a basis of the reference result, the point exchange registration module 54 reads the cumulative points corresponding to this membership code.

Next, in Step S23, the input receiving module 51 (exchange commodity information-receiving means) receives the input of the exchange commodity code via the scanner 16 or the keyboard 15. In Step S24, the point exchange registration module 54 refers to the exchange commodity master 683 of the HDD 20 in relation to the exchange commodity code received in Step S23. In Step S25, on a basis of the reference result, the point exchange registration module 54 reads information corresponding to the exchange commodity code, i.e., the exchange commodity information from the exchange commodity master 683. In Step S26, the point exchange registration module 54 determines whether or not the cumulative points read in Step S22 are equal to or more than exchange points included in the exchange commodity information read in Step S25. If the cumulative points are equal to or more than the exchange points (Step S26: Yes), the processing of the controller 11 shifts to Step S27. In Step S27, the display control module 52 updates the display of the point exchange screen 171 by using the exchange commodity information read in Step S25. On the other hand, if the cumulative points are less than the exchange points (Step S26: No), the processing of the controller 11 shifts to Step S28. In Step S28, the display control module 52 controls the display device 17 for a store employee to display an error indication. After the error indication is displayed, the processing of the controller 11 returns to Step S23.

After the display of the point exchange screen 171 is updated (see Step S27), the processing of the controller 11 shifts to Step S29. In Step S29, the input receiving module 51 determines whether or not the confirmation key 153 of the keyboard 15 has received an operation. If the confirmation key 153 has not received the operation (Step S29: No), the input receiving module 51 stands by until the confirmation key 153 has received the operation in Step S29.
If the confirmation key 153 has received the operation (Step S29: Yes), the processing of the controller 11 shifts to Step S30. In Step S30, the point exchange registration module 54 generates point registration data, i.e., the above-mentioned point registration data, and registers the generated point registration data in the electronic journal file of the HDD 20. In addition, on a basis of the point registration data, the point exchange registration module 54 generates printing data of the receipt and the journal.

Further, in Step S31, the point exchange registration module 54 sends the generated point registration data to the store server 4 and the headquarters server 6 in order to register the generated point registration data in each of the data files of the store server 4 and the headquarters server 6. Moreover, the point exchange registration module 54 sends data including the exchange points and the remaining points after point exchange to the headquarters server 6 in order to update the cumulative points of the membership master 682 of the headquarters server 6. Then, in Step S32, the printing control module 55 issues a receipt and a journal on which the printing data generated in Step S30 has been printed.

As described above, the POS terminal 1 according to this embodiment includes the point exchange key 151. By this key being operated, the POS terminal 1 according to this embodiment displays the point exchange screen 171. With this, the store employee can quickly starts the point exchange processing by switching the display from the sales registration screen to the point exchange screen 171 with one action. Further, the store employee can switch the display from the sales registration screen to the point exchange screen 171 with one action, and hence the store employee can easily start the point exchange processing. Thus, the POS terminal 1 enables also store employees inexperienced in the operation to smoothly perform the work while reducing the burden thereon. Thus, in accordance with this embodiment, it is possible to provide an information processing apparatus and a program, by which the point exchange work can be simplified.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An information processing apparatus that manages points of a customer, which are exchangeable into an exchange commodity, and performs point exchange processing of exchanging points into an exchange commodity, comprising:
an exchange processing start key that receives an operation to instruct to start the point exchange processing;
a confirmation key that receives an operation to instruct to confirm the point exchange processing;
a display that displays an exchange registration screen including information regarding the point exchange processing;
a first input interface for inputting identification information of the customer;
a second input interface for inputting identification information of the exchange commodity;
a memory including
a first master that stores the identification information of the customer and information regarding cumulative points of the customer in association with each other, and
a second master that stores the identification information of the exchange commodity and exchange commodity information including exchange points of the exchange commodity; and
a controller that
controls the display to display the exchange registration screen when the exchange processing start key receives the operation,
reads the cumulative points of the customer, which are associated with the identification information of the customer, which is input from the first master, when receiving an input of the identification information of the customer through the first input interface,
reads the points of the exchange commodity, which are associated with the input identification information of the exchange commodity, from the second master when receiving an input of the identification information of the exchange commodity through the second input interface,
controls the display to display the exchange commodity information, which is associated with the input identification information of the exchange commodity, on the exchange registration screen in a case where the read cumulative points of the customer are equal to or more than the read exchange points of the commodity and controls the display to display an error in a case where the read cumulative points of the customer are less than the read exchange points of the exchange commodity, and
subtracts the read exchange points of the exchange commodity from the read cumulative points of the customer to thereby update the cumulative points of the customer in the first master when the confirmation key receives the operation.

2. The information processing apparatus according to claim 1, wherein the controller
controls the display to display a sales registration screen for performing sales registration of commodities before the exchange processing start key receives the operation, and
switches the display of the display from the sales registration screen to the exchange registration screen when the exchange processing start key receives the operation.

3. The information processing apparatus according to claim 1, wherein the controller controls the display to display, in a background of the exchange registration screen, a text indicating that the exchange registration screen is a screen for performing the point exchange processing.

4. The information processing apparatus according to claim 2, wherein the controller controls the display to display a background of the exchange registration screen in color different from color of a background of the sales registration screen.

5. The information processing apparatus according to any one of claims 1 o 4, wherein
the controller generates, when the confirmation key receives the operation, point registration data including
the identification information of the exchange commodity,
a name of the exchange commodity,
the cumulative points,
the exchange points, and
cumulative points after the exchange processing, the cumulative points after the exchange processing being obtained by subtracting the exchange points from the cumulative points.

6. A control method for an information processing apparatus including an exchange processing start key that receives an operation to instruct to start point exchange processing of exchanging points into an exchange commodity, a confirmation key that receives an operation to instruct to confirm the point exchange processing, a display that displays an exchange registration screen including information regarding the point exchange processing, a first input interface for inputting identification information of the customer, a second input interface for inputting identification information of the exchange commodity, a memory including a first master that stores the identification information of the customer and information regarding cumulative points of the customer in association with each other and a second master that stores the identification information of an exchange commodity and exchange commodity information including exchange points of the exchange commodity, the control method comprising:
controlling the display to display the exchange registration screen when the exchange processing start key receives the operation;
reading the cumulative points of the customer, which are associated with the identification information of the customer, which is input from the first master, when receiving an input of the identification information of the customer through the first input interface;
reading the points of the exchange commodity, which are associated with the input identification information of the exchange commodity, from the second master when receiving an input of the identification information of the exchange commodity through the second input interface;
controlling the display to display the exchange commodity information, which is associated with the input identification information of the exchange commodity, on the exchange registration screen in a case where the read cumulative points of the customer are equal to or more than the read exchange points of the commodity and controlling the display to display an error in a case where the read cumulative points of the customer are less than the read exchange points of the exchange commodity; and
subtracting the read exchange points of the exchange commodity from the read cumulative points of the customer to thereby update the cumulative points of the customer in the first master when the confirmation key receives the operation.

7. The control method for an information processing apparatus according to claim 6, further comprising:
controlling the display to display a sales registration screen for performing sales registration of commodities before the exchange processing start key receives the operation; and
switching the display of the display from the sales registration screen to the exchange registration screen when the exchange processing start key receives the operation.

8. The control method for an information processing apparatus according to claim 6, wherein
controlling the display to display the exchange registration screen includes controlling the display to display, in a background of the exchange registration screen, a text indicating that the exchange registration screen is a screen for performing the point exchange processing.

9. The control method for an information processing apparatus according to claim 7, wherein
controlling the display to display the exchange registration screen includes controlling the display to display a background of the exchange registration screen in color different from color of a background of the sales registration screen.

10. The control method for an information processing apparatus according to any one of claims 6 to 9, further comprising generating, when the confirmation key receives the operation, point registration data including the identification information of the exchange commodity, a name of the exchange commodity, the cumulative points, the exchange points, and cumulative points after the exchange processing, the cumulative points after the exchange processing being obtained by subtracting the exchange points from the cumulative points.
